(19) Europäisches Patentamt / European Patent Office / Office européen des brevets

(11) **EP 2 006 849 A1**

(12) **EUROPEAN PATENT APPLICATION**

(43) Date of publication:
**24.12.2008 Bulletin 2008/52**

(51) Int Cl.:
*G11B 7/13* (2006.01)      *G11B 7/09* (2006.01)
*G11B 7/135* (2006.01)

(21) Application number: **07110477.2**

(22) Date of filing: **18.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Deutsche Thomson OHG
30625 Hannover (DE)**

(72) Inventors:
- **Knittel, Joachim**
  **78532, Tuttlingen (DE)**
- **Mrowka, Zdzislaw**
  **78052, VS-Villingen (DE)**

(74) Representative: **Arnold, Klaus-Peter
Deutsche Thomson OHG
European Patent Operations
Karl-Wiechert-Allee 74
30625 Hannover (DE)**

(54) **Apparatus comprising a pickup unit for reading data from or writing data to an optical storage medium**

(57)  The apparatus comprises a pickup unit (PU) with a laser (L) and an objective lens (18) for reading data from or writing data to an optical storage medium (D), the pickup unit (PU) comprising further only one single detector unit (DU) consisting of three segments (A, B, C) for providing a focus error signal, a tracking error signal and a data signal. The three segments (A, B, C) consist in particular of a strip-like center segment (B) and two strip-like outer segments (A, C), the width of the center strip (B) being smaller than the two outer strips (A, C). A focus error signal (FES) can be provided from the detector unit (DU) by a using the formula FES = $(S_A + S_C - x*S_B)/(S_A + x*S_3 + S_C)$, with $0 < x < 1$.

Fig. 1

EP 2 006 849 A1

**Description**

**TECHNICAL FIELD OF THE INVENTION**

The apparatus according the invention comprises a pickup unit with a laser and an objective lens for illuminating an optical storage medium with a high intensity beam for reading data from or writing data to an optical storage medium, in particular to rotatable optical storage disks.

**BACKGROUND OF THE INVENTION**

Optical storage disks of this kind are storage media in which data are stored and written to by means of a laser beam, in particular by using a pickup unit comprising a laser and an objective lens for illuminating the optical storage medium and an optical detector unit for detecting the reflected light of the laser when reading or writing the data. The data are stored along tracks being arranged essentially in parallel on the storage medium. For reading and writing of the data, the apparatus includes a servo system, which positions the pickup unit with regard to a specific track of the rotating disk. The servo system comprises in particular a tracking error system and a focus error system for positioning the respective track in the focus of the objective lens. A respective tracking error signal and focus error signal are provided by means of the detector unit of the pickup unit, together with the data signal.

In US 2002/0136108 Al an apparatus for writing and reading data from an optical storage medium is described, which includes a swingarm-type actuator, for moving a miniaturized pickup unit across a rotating optical disk. The swing arm comprises magnetic actuators for providing a tracking control and a focus control. At the front end of the swingarm actuator the pickup unit is arranged with the optical components. For a detection of the reflected light from the optical disk two detector units are used, which include each three photo sensitive segments. The two detector units are used for providing a focus error signal, a tracking error signal and a data signal.

The detection units as described in this reference have each three strip-like segments of the same width, and two detection units are used for calculating a focus error signal. One of these detector units is closer to the optical disk and the second is further away from the optical disk than the laser with regard to the optical path length, and the resulting focus error signal is calculated from the difference of the signals as provided by both detectors.

Pickup units comprising two detector units including each three strip-like photosensitive segments are also known from US 4,742,218 and DE 44 36 555.

**SUMMARY OF THE INVENTION**

The apparatus according to the invention comprises a pickup unit with a laser and an objective lens for reading data from or writing data to an optical storage medium, the pick-up unit comprising further only one single detector unit with three optical sensitive segments for providing a focus error signal, a tracking error signal and a data signal. The three segments are in particular strip-like segments with a center strip having a width, which is smaller than the width of the two outer strips. A detector unit of this kind provides an improved focus error signal for a correction of a focus error, when reading data from the optical storage medium.

In a preferred embodiment, the pickup unit comprises an integrated micro-pickup, on which the objective lens and the detector unit have both a fixed position, and the detector unit has a position with regard to the optical path, which is closer to the focus on the optical storage medium, as provided by the laser, than the laser. The spot on the detector unit as reflected from the optical storage medium has then a well defined diameter larger than zero, when the spot on the optical storage medium is in focus.

For calculating the focus error signal, in particular a factor x is used for weighting the signal as provided by the center strip, x being in a range of $0 < x < 1$, and in a preferred in a range of $0,4 < x < 0,6$. This factor is selected such that a focus error signal having a larger amplitude for positive disk shifts and a better linearity in particular in the range of the in-focus position.

A pickup unit of this kind has the disadvantage, that crosstalk exists between the focus error signal and the tracking error signal, according to which the focus error correction is dependent on the tracking error signal and vice versa. This crosstalk effect can be compensated by digital signal processing using a so-called "multi-input-multi-output system" which uses a transfer function, which takes into account a tilt control signal being calculated from the tracking error signal. The nonlinearity of the focus error signal can be compensated by using an inversion of the nonlinearities.

The invention is in particular suitable for applications in video disk players or audio disk players for reading digital data from or writing digital data to a rotating optical storage disk. A pickup unit of this kind may be used in particular also for a compact swingarm actuator for mobile applications.

## BRIEF DESCRIPTION OF THE DRAWINGS

Preferred embodiments of the invention are explained now in more detail below by way of example with reference to schematic drawings, which show:

Fig. 1 a pickup unit comprising a laser, a light guide, an objective lens and an optical detector unit,
Fig. 2 a geometrical layout of the detector unit of figure 1,
Fig. 3 a calculated focus error signal for a pickup unit in correspondence with figures 1 and 2,
Fig. 4 a multi-input-multi-output system for compensating nonlinearity and crosstalk effects for a focus error signal and a tracking error signal,
Fig. 5 a calculated push-pull tracking error signal as a function of a radial disk tilt and a radial position on the disk, and
Fig. 6 a calculated focus error signal as a function of a radial disk tilt and a radial position on a disk.

## DETAILED DESCRIPTION OF PREFERRED EMBODIMENTS

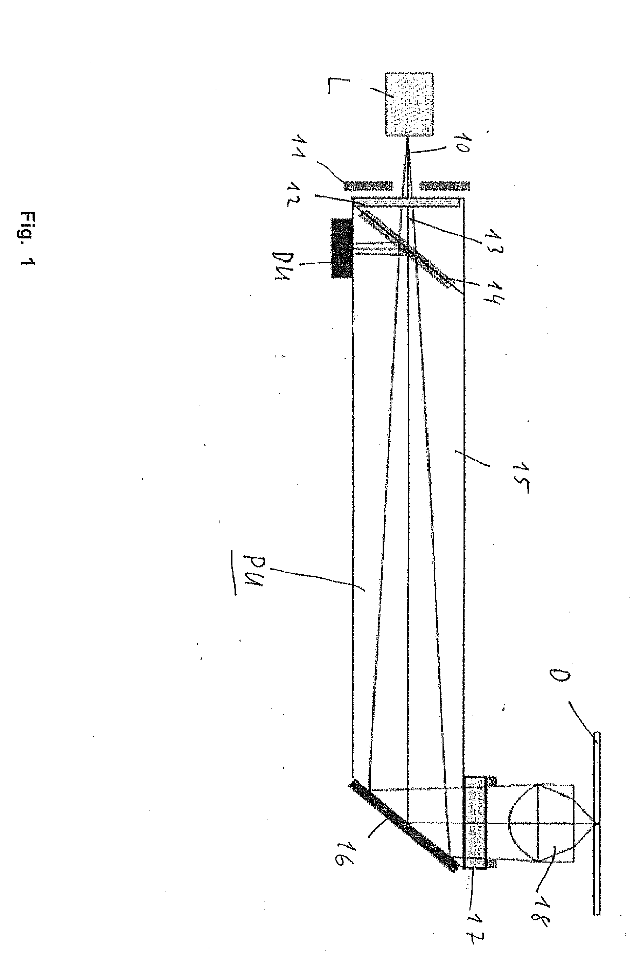

In figure 1 an optical pickup unit PU is shown for reading from and/or writing data to an optical storage medium D, in particular a rotatable optical disk. The pickup unit PU comprises a laser L providing an intense light beam 10 to be focused onto the optical storage medium D. The light beam 10 of the laser L is collimated by a collimator 11 for reducing stray light and for guiding the light beam 10 into the direction of the optical disk D, and passes then a first optical element 12 for providing a linearly polarized laser beam 13. The first optical element 12 is mounted in front of a light guide 15 and is for example a half-wave (lambda/2) plate.

The light beam 13 passes then essentially unaffected a beam splitter 14, in particular a polarizing beam splitter, included in the light guide 15. At the end of the light guide 15, the light beam 13 is reflected under an angle of 90° into the direction of the optical storage medium D by a reflective coating 14 and passes then first a second optical element 17, for example a quarter wave (lambda/4) plate, for providing a circularly polarized beam, and then an objective lens 18, which provides a beam spot with a very small focus and a high beam intensity on the optical storage medium D.

Reflected light from the optical storage medium D is collected by the objective lens 18 and guided into the light guide 15 by passing through the second optical element 17, and then reflected by the reflective coating 16 into the direction of the beam splitter 14. The beam splitter 14 is arranged in particular such, that the light reflected from the optical disk D is reflected under an angle, for example 90°, onto a detector unit DU. The detector unit DU provides a tracking error signal and a focus error signal when writing data onto the optical storage medium D, and also a data signal when reading data from the optical storage medium D.

The pickup unit PU is included in an apparatus which comprises in particular a motor with a turntable, on which the optical storage medium D is arranged. The optical storage medium D is in particular a read-only optical disk comprising digital data being arranged as pits on essentially parallel tracks, or is a recordable disk, for writing digital data into respective tracks. For reading data from the optical disk or writing data onto the optical disk, the pickup unit PU is moved in an essentially radial direction across the rotating optical disk D. The pickup unit PU may be arranged on a swingarm, respectively actuator arm, as known for example from US2002/0136108.

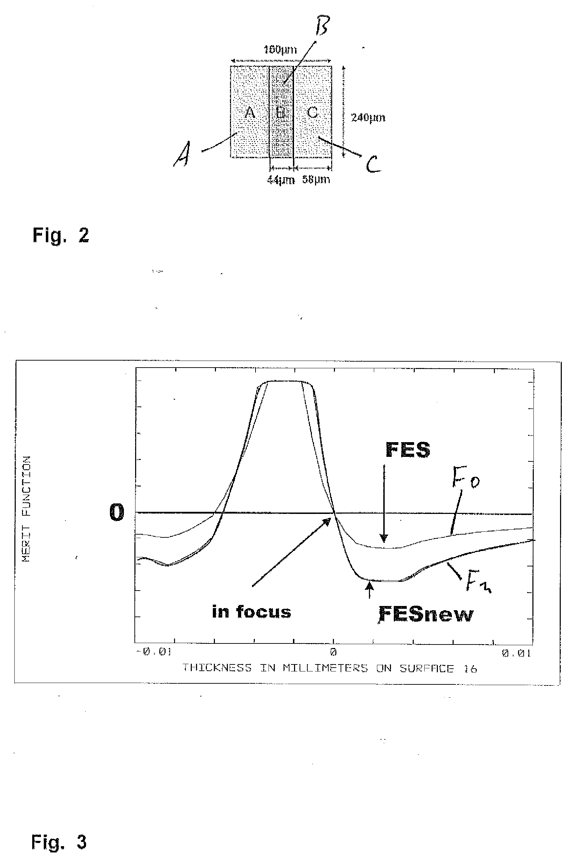

The detector unit DU comprises only three light sensitive segments, in particular three strip-like segments A, B, C arranged in parallel, as shown in figure 2. In a preferred embodiment, the center segment B has a smaller width than the two outer segments A, C and the segments A and C have the same width. The length can be essentially the same for all three segments. For an application with a blue laser L providing a wavelength of about 405 $\mu$m, the segments A - C may be dimensioned as shown in figure 2.

The detector unit DU is arranged on the light guide 15 such, that the optical path length of the light reflected from the optical disk D to the detector unit DU is shorter than the optical path length from the laser L to the optical disk D, so that the spot on the detector unit DU has a certain well defined diameter. This diameter and the dimensions of the detector strips are chosen such that a focus error signal FES is zero when the optical disk D is in the focus of the light beam as provided the laser L.

The three light sensitive segments A, B, C of the detector unit DU are connected with a suitable read-out electronics for detecting the light intensity occurring on each of the segments. A data signal DS can be calculated from the sum of the intensities of the three segments A, B, C: $DS = S_A + S_B + S_C$. A push-pull tracking error signal TES can be calculated by the formula $TES = (S_A - S_C) / (S_A + S_C)$.

The focus error signal FES can be calculated based on the FES formula, as described already in US 2002/0136108 for three segment detection units of this kind. In addition, for calculating the focus error signal FES, the formula comprises according to the invention a factor x:

$$FES = (S_A + S_C - x*S_B)/(S_A + x*S_B + S_C) \qquad 1.1$$

The factor x includes values in a range of 0<x<1. In a preferred embodiment, x is in a range of 0,4<x<0,6, for example 0,5. The width of the center segment B and x is chosen such that the focus error signal FES=0, or at least FES<0,005, when the laser L is focused to a minimum spot size on a track of the optical storage medium D.

By using a factor x<1, the shape of the focus error signal FES can be significantly improved. In figure 3, a calculated error signal Fn is shown for a pickup unit PU shown in figure 1 and a detector unit DU comprising dimensions as shown in figure 2, by using a factor x=0,5. For a comparison, a graph Fo is shown which is based on the same pickup unit PU, but with a detector unit comprising three stripe-like segments of same width, for which a focus error signal is calculated by including a factor x=1 in the above formula 1.1.

The focus error signals Fn, Fo are shown in dependency of the distance of the objective lens to the optical disk in mm with regard to the focus position, for which the focus error signal is zero, when the disk is in the focus of the laser beam of the pickup unit.

As can be seen in figure 3, the focus error signal Fn according to the invention is more symmetrical and has a better linearity around the in-focus position Fn=0, as compared with the focus error signal Fo. Also, the signal Fn has a much larger amplitude for positive disk shifts, which corresponds with a larger gap between the disk and the objective lens of the pickup unit. This provides a larger regulation range for the focus error regulation with regard to positive disk shifts.

For a pickup unit PU as described with regard to figures 1 and 2, there exist two undesirable effects: the first is crosstalk between the focus error signal and the tracking error signal, which makes the focus error compensation dependent on the tracking error signal and vice versa. The second is a non-linearity of the focus error signal FES for values Fn<0 and Fn>0, as can be seen from the graph Fn of figure 3.

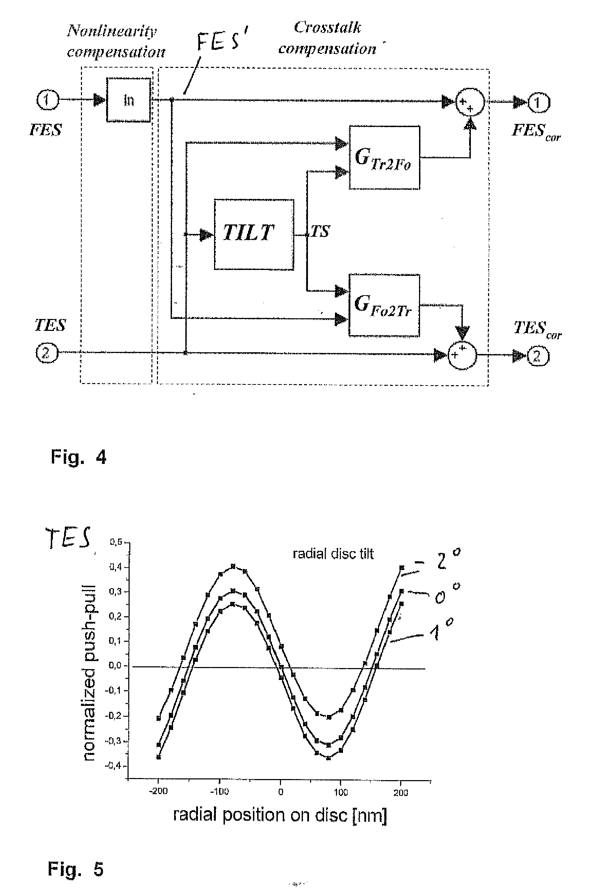

These undesirable effects can be removed by using digital signal processing as shown in figure 4. In a first step, the non-linearity of the focus error signal FES is compensated by using an inversion of the nonlinearities. This can be carried out by multiplying the FES signal with a transfer function based on correction values included in a correction block In, as shown in figure 4. The transfer function can be based for example on correction values being included in a look-up table for the complete operating range, or the transfer function may be approximated by using a logarithmic function with reference to the operating point, FES=0.

In a next step, the crosstalk between the focus error signal FES' and the tracking error signal TES is calculated by taking into account a tilt correction, as shown in figure 4: For calculating the tilt correction, the tracking error signal TES is used, which results in a tilt signal TS.

In a next step, the tilt signal TS is used to calculate a transfer function $G_{Tr2Fo}$ from the tracking error signal TES, which transfer function is used to calculate a corrected focus error signal $FES_{cor}$ from the non-linearity corrected focus error signal FES'. The interaction of the focus error signal FES on the tracking error signal TES is taken into account by calculating a transfer function $G_{Fo2Tr}$ from the tilt signal TS and the non-linearity corrected focus error signal FES'. The transfer function $G_{Fo2Tr}$ is used to calculate a corrected tracking error signal $TES_{cor}$ from the tracking error signal TES, as shown in figure 4.

The compensation of the crosstalk effects between the focus error signal FES and the tracking error signal TES, together with the non-linearity compensation of the focus error signal FES, can be performed in correspondence with a so-called "Multi Input Multi Output" system or MIMO system with two input channels and two output channels, which calculation can be performed for example by a microprocessor. An advantage of this solution is an adaptive compensation of tilt changes, which are different for different discs and which are dependent on the clamping position or on the clamping system itself. In addition, a compensation of a misalignment between the laser L and the detector unit DU can be included.

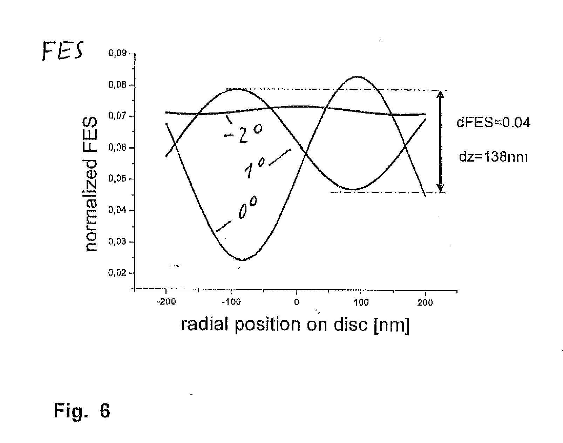

The tilt correction signal TS can be calculated from a complete revolution of the push-pull tracking error signal TES, which results in an offset value for the tracking error signal TES, as can be seen in figure 5, which shows a normalized tracking error signal TES as a function of the radial position on the disc in nanometers without a disc tilt and for two radial disc tilt values of 1° and - 2°. In figure 6, the influence of the radial disc tilt for disc tilt values 0°, 1° and -2° is shown for a normalized focus error signal FES in dependency on the radial position on the disc.

Also other embodiments of the invention can be made by a person skilled in the art without departing from the spirit and scope of the present invention. The pickup unit as described may be used with lasers of different kinds of wavelength and is not limited to a laser diode with a blue wavelength. The pickup unit may be designed also in accordance with a variety of different optical storage media. The invention resides therefore in the claims herein after appended.

**Claims**

1. Apparatus comprising a pickup unit (PU) with a laser (L) and an objective lens (18) for reading data from or writing data to an optical storage medium (D), wherein the pickup unit (PU) comprises only one single detector unit (DU) consisting of three segments (A, B, C) for providing a focus error signal, a tracking error signal and a data signal.

2. The apparatus of claim 1, wherein the three segments (A, B, C) are a strip-like center segment (B) and two strip-like outer segments (A, C), the width of the center strip (B) being smaller than the two outer strips (A, C).

3. The apparatus of claim 2, wherein the length of the three strips (A - C) is the same and the width of the two outer strips (A, C) is the same.

4. The apparatus according to one of the preceding claims, wherein a data signal of the detector unit (DU) is provided by a signal $DS=S_A+S_B+S_C$ and a push-pull tracking error signal is provided by a signal $TES = (S_A - S_C)/(S_A + S_C)$.

5. The apparatus according to one of the preceding claims, wherein a focus error signal is provided by a signal $FES = (S_A+S_C-x*S_B)/(S_A+x*S_B+S_C)$, with $0 < x < 1$.

6. The apparatus of claim 5, wherein x is in a range of 0,4 - 0,6.

7. The apparatus of claim 5 or 6, wherein the width of the center segment (B) and x is chosen such that the focus error signal $FES=0$, or $FES<0,005$, when the laser (L) is focused to a minimum spot size on a track of the optical storage medium (D).

8. The apparatus according to one of the preceding claims, wherein the pickup unit (PU) comprises a light guide (15) with an integrated beam splitter (14), and wherein the position of the objective lens (18) and the detector unit (DU) is fixed on the light guide (15).

9. The apparatus according to claim 8, wherein the detector unit (DU) as positioned on the light guide (15) is closer to the focus as provided by the objective lens (18) with regard to the optical path length, than the laser (L).

10. Apparatus according to one of the preceding claims 5 - 9, **wherein** a multi input/multi output system is included comprising a first input, to which the focus error signal (FES) is applied, and a second input, to which a tracking error signal (TES) is applied, for a correction of crosstalk effects between the focus error signal (FES) and the tracking error signal (TES).

11. Apparatus according to claim 10, wherein the multi input/multi output system calculates a tilt correction signal (TS) from the tracking error signal (TES), and wherein the tilt correction signal (TS) is used for correcting the focus error signal (FES) and the tracking error signal (TES), and wherein the tilt corrected tracking error signal (TES) is used for correcting the focus error signal (FES) and the tilt corrected focus error signal is used for correcting the tracking error signal (TES).

12. Apparatus according to one of the preceding claims 5 - 11, **wherein** a non-linearity compensation for the focus error signal (FES) is provided by calculating a transfer function which includes the inversion of none linearity's and by multiplying the focus error signal (FES) by the transfer function (LN), the none linearity's being compensated by using a look-up table or a logarithmic function included in the transfer function.

**Fig. 1**

**Fig. 2**

**Fig. 3**

**Fig. 4**

**Fig. 5**

Fig. 6

**European Patent Office**

**EUROPEAN SEARCH REPORT**

Application Number

EP 07 11 0477

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 03 209634 A (MATSUSHITA ELECTRIC IND CO LTD) 12 September 1991 (1991-09-12) | 1-4 | INV.<br>G11B7/13 |
| Y | * abstract; figures 1,3 * | 5-7,12 | G11B7/09<br>G11B7/135 |
| Y,D | US 6 930 963 B2 (KADLEC RON J [US] ET AL KADLEC RON J [US] ET AL) 16 August 2005 (2005-08-16) | 12 | |
| A | * columns 21-22; figures 5A-1 * | 1-4 | |
| Y | JP 2006 004511 A (SONY CORP) 5 January 2006 (2006-01-05) * abstract; figures 2,15 * * paragraph [0011] * | 5-7 | |
| A | JP 03 086936 A (NHK SPRING CO LTD) 11 April 1991 (1991-04-11) * abstract; figures 1-4,10-12 * | 2-6 | |
| A | JP 05 266530 A (OMRON CORP) 15 October 1993 (1993-10-15) * abstract; figures 1,2 * | 1-4 | TECHNICAL FIELDS SEARCHED (IPC) |
| A | US 6 122 241 A (AKIYAMA HIROSHI [JP] ET AL) 19 September 2000 (2000-09-19) * column 32 - column 33; figures 57,58 * | 1-4 | G11B |

~~The present search report has been drawn up for all claims~~

| Place of search | Date of completion of the search | Examiner |
|---|---|---|
| The Hague | 17 August 2007 | Schweiger, Dietmar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent

Office

Application Number

EP 07 11 0477

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-7, 10-12 dependent on 5-7

**European Patent Office**

**LACK OF UNITY OF INVENTION
SHEET B**

Application Number

EP 07 11 0477

The Search Division considers that the present European patent application does not comply with the requirements of unity of invention and relates to several inventions or groups of inventions, namely:

```
1. claims: 1-7, 10-12 dependent on 5-7

        How to improve the signal quality of the focus error signal.
                            ---

2. claims: 1,8,9,10-12 dependent on 8 and 9

                    How to provide an integrated head assembly.
                            ---
```

**ANNEX TO THE EUROPEAN SEARCH REPORT
ON EUROPEAN PATENT APPLICATION NO.**                    EP 07 11 0477

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2007

| Patent document cited in search report | | Publication date | Patent family member(s) | Publication date |
|---|---|---|---|---|
| JP 3209634 | A | 12-09-1991 | NONE | |
| US 6930963 | B2 | 16-08-2005 | US 2002136108 A1 | 26-09-2002 |
| JP 2006004511 | A | 05-01-2006 | NONE | |
| JP 3086936 | A | 11-04-1991 | NONE | |
| JP 5266530 | A | 15-10-1993 | NONE | |
| US 6122241 | A | 19-09-2000 | NONE | |

EPO FORM P0459

For more details about this annex : see Official Journal of the European Patent Office, No. 12/82

**EP 2 006 849 A1**

**Patent documents cited in the description**

- US 20020136108 A1
- US 4742218 A
- DE 4436555
- US 20020136108 A